# EUROPÄISCHE PATENTSCHRIFT

(11) **EP 1 994 676 B1**
(45) Veröffentlichungstag und Bekanntmachung des Hinweises auf die Patenterteilung: **08.02.2012**
(21) Anmeldenummer: 06722564.9
(22) Anmeldetag: 02.03.2006
(51) Int. Cl.: H04L 12/18

(54) **VERFAHREN ZUM ERZEUGEN EINES ADRESSFELDES, VERFAHREN UND VORRICHTUNG ZUR ÜBERTRAGUNG EINER ELECTRONISCHEN NACHRICHT SOWIE DATENPAKET**
METHOD FOR GENERATING AN ADDRESS FIELD METHOD AND DEVICE FOR TRANSMITTING AN ELECTRONIC MESSAGE AND DATA PACKET
PROCÉDÉ DE CRÉATION D'UN CHAMP D'ADRESSE, PROCÉDÉ ET DISPOSITIF DE TRANSMISSION D'UN MESSAGE ÉLECTRONIQUE ET PAQUET DE DONNÉES

(43) Veröffentlichungstag der Anmeldung: 26.11.2008
(73) Patentinhaber: Nokia Siemens Networks GmbH & Co. KG, 81541 München (DE)
(72) Erfinder: KAPPLER, Cornelia, 10587 Berlin (DE); ZHOU, Di, A-1220 Wien (AT)
(86) Internationale Anmeldenummer: PCT/DE2006/000398
(87) Internationale Veröffentlichungsnummer: WO 2007/098721

(56) Entgegenhaltungen:
- EP-A- 1 233 572
- US-A- 5 740 375
- US-A1- 2001 043 601
- PIM WG BILL FENNER/AT&T MARK HANDLEY/UCL HUGH HOLBROOK/CISCO ISIDOR KOUVELAS/CISCO: "Protocol Independent Multicast - Sparse Mode (PIM-SM): Protocol Specification (Revised); draft-ietf-pim-sm-v2-new-11.txt;" IETF STANDARD-WORKING-DRAFT, INTERNET ENGINEERING TASK FORCE, IETF, CH, Bd. pim, Nr. 11, 25. Oktober 2004 (2004-10-25), XP015038798 ISSN: 0000-0004

## Beschreibung

Die Erfindung betrifft ein Verfahren zum Erzeugen eines Adressfeldes. Ähnliche Verfahren sind aus dem Internet-DRAFT "Protocol Independent Multicast - Sparse Mode (PIM-SM): Protocol Specification" vom 25. Oktober 2004 der Internet Engineering Task Force und der Europäischen Patentanmeldung EP 1233572 A1 "Method and System for multiple hosts anycast routing" bekannt.

Der Internet-DRAFT "Protocol Independent Multicast - Sparse Mode (PIM-SM): Protocol Specification" beschreibt in Kapitel 4.9.1 die Verwendung einer Maske, die in Kombination mit einer Gruppenadresse einen Bereich von Gruppenadressen definiert. Hierbei legt die Maske die Anzahl von aufeinanderfolgenden Gruppenadressbits die berücksichtigt werden sollen fest, startend von dem höchstwertigen Gruppenadressbit.
Die europäische Patentanmeldung 1233572 A1 "Method and System for multiple hosts anycast routing" beschreibt ein Verfahren um Teile von Endgerätegruppen zu adressieren, wobei die gesamte Endgerätegruppe durch eine "anycast" Adresse identifiziert wird, und die zu adressierenden Gruppenmitglieder durch einen weiteren zusätzlichen Indikator bestimmt werden, der auf der räumlichen Nähe der Gruppenmitglieder basiert.

Derzeit werden mehr und mehr unterschiedliche Arten sowohl mobiler als auch drahtgebundener Kommunikationsnetzwerke mit vollkommen unterschiedlichen Eigenschaften und Größen entworfen, entwickelt und für verschiedenste Anwendungen eingesetzt. In dieser Situation stellt sich als Voraussetzung für eine Kommunikation zwischen Endgeräten oder Netzknoten der Kommunikationsnetzwerke die Frage, wie in Zukunft eine effiziente Adressierung von Empfängern einer elektronischen Nachricht erfolgen kann. Dies gilt insbesondere für solche elektronischen Nachrichten, für die gleichzeitig eine Übermittlung an mehrere Empfänger stattfindet.

Der vorliegenden Erfindung liegt die Aufgabe zugrunde, ein einfaches und flexibles Verfahren zum Erzeugen eines Adressfeldes anzugeben.

Diese Aufgabe wird erfindungsgemäß gelöst durch ein Verfahren zum Erzeugen eines Adressfeldes einer elektronischen Nachricht mit den folgenden Schritten: Bilden eines ersten und eines zweiten Adressteils aus jeweils einer Kette mit mehreren Zeichen derart, dass der zweite Adressteil diejenigen Zeichen einer Adresse kennzeichnet, deren Werte invariabel durch das betreffende Zeichen des ersten Adressteils festgelegt sind, und/oder diejenigen Zeichen der Adresse kennzeichnet, deren Werte variabel sind, und dass der erste Adressteil lediglich diejenigen Zeichen der Adresse umfasst, deren Werte invariabel sind, und Zusammenfassen des ersten und des zweiten Adressteils zu dem Adressfeld.

Das erfindungsgemäße Verfahren ist vorteilhaft, da es auf einfache Art und weise eine Adressierung mehrerer Empfänger wie beispielsweise Teilnehmer bzw. Endgeräte oder Netzknoten eines Kommunikationsnetzwerkes oder mehrerer Kommunikationsnetzwerke erlaubt. Zu diesem Zwecke werden zwei Adressteile verwendet, die gemeinsam eine Adresse festlegen, aus der den Empfängern zugeordnete Empfängeradressen ableitbar sind. Das Zusammenspiel des ersten und des zweiten Adressteils erfolgt dabei derart, dass der zweite Adressteil diejenigen Zeichen der Adresse kennzeichnet, deren Werte invariabel durch das betreffende Zeichen des ersten Adreneteils festgelegt sind. Zusätzlich oder alternativ hierzu kann der zweite Adressteil darüber hinaus diejenigen Zeichen der Adresse bestimmen, deren Werte variabel sind.

Weiterhin ist das erfindungsgemäße Verfahren vorteilhaft, da hierdurch im ersten Adressteil auf die Angabe derjenigen Zeichen verzichtet werden kann, deren Werte durch den zweiten Adressteil als variabel gekennzeichnet sind. Somit reicht vorteilhafterweise ein Adressfeld kürzerer Länge zur Festlegung der Adresse aus

In einer aufgrund ihrer Einfachheit bevorzugten Ausführungsform des erfindungsgemäßen Verfahrens, bei der der erste und der zweite Adressteil aus Zeichen in Form von Bits mit den möglichen Werten 0 und 1 bestehen, könnte der zweite Adressteil beispielsweise derart aufgebaut sein, dass er an den Stellen der Adresse, deren Zeichen variabel sein sollen, eine 0 und an den Stellen der Adresse, die durch dem Wert des betreffenden Zeichens des ersten Adressteils festgelegt sein sollen, eine 1 aufweist. Die auf eine solche Art und Weise festgelegte Adresse gestattet die Ableitung mehrerer Empfängeradressen. Somit kann das mittels des erfindungsgemäßen Verfahrens erzeugte Adressfeld vorteilhafterweise insbesondere im Zusammenhang mit elektronischen Nachrichten in Form so genannter Multicast-Nachrichten verwendet werden, bei denen inhaltlich identische Kopien elektronischer Nachrichten an mehrere Empfänger gesendet werden.

Die Erfindung betrifft darüber hinaus ein Verfahren zur Übertragung einer elektronischen Nachricht.

Bezüglich des Verfahrens zur Übertragung einer elektronischen Nachricht liegt der vorliegenden Erfindung die Aufgabe zugrunde, ein einfaches und flexibles Verfahren zur Übertragung einer elektronischen Nachricht an mehrere Empfänger anzugeben.

Diese Aufgabe wird erfindungsgemäß gelöst durch ein Verfahren zur Übertragung einer elektronischen Nachricht in einem Kommunikationsnetzwerk von einem Sender an mehrere Empfänger mit den folgenden Schritten: Bilden eines ersten und eines zweiten Adressteils aus jeweils einer Kette mit mehreren Zeichen derart, dass der zweite Adressteil diejenigen Zeichen einer Adresse kennzeichnet, deren Werte invariabel durch das betreffende Zeichen des ersten Adressteils festgelegt sind, und/oder diejenigen Zeichen der Adresse kennzeichnet, deren werte variabel sind, Senden der elektronischen Nachricht mit den Adressteilen an eine Netzwerkkomponente, Bestimmen der den Empfängern zugeordneten Empfängeradressen in der Netzwerkkomponente durch jeweiliges Variieren der gemäß dem zweiten Adressteil in ihren Werten variablen Zeichen innerhalb einer vorbestimmten Menge möglicher Werte der Zeichen und Übertragen der elektronischen Nachricht an die den bestimmten Adressen zugeordneten Empfänger.

Das erfindungsgemäße Verfahren bietet den Vorteil, dass mittels des ersten und des zweiten Adressteils auf vorteilhafte Art und Weise gleichzeitig mehrere Empfänger adressiert werden können. Zu diesem Zwecke enthält die Adresse vorbestimmte variable Zeichen. Wird eine mit der aus dem ersten und zweiten Adressteil bestehenden Adresse versehene elektronische Nachricht von einem Sender an eine für die Übertragung der elektronischen Nachricht zuständige Netzwerkkomponente, wie beispielsweise einen Router, übermittelt, so kann diese die Empfängeradressen dadurch bestimmen, dass sie jeweils die gemäß dem zweiten Adressteil in ihren Werten variablen Zeichen innerhalb einer vorbestimmten Menge möglicher Werte der Zeichen variiert. Dabei hängt die vorbestimmte Menge möglicher Werte der Zeichen insbesondere von den im jeweiligen Fall zur Adressierung zugelassenen Zeichen ab. Bei diesen kann es sich beispielsweise bei Verwendung einer binären Adresse um die Zeichen 0 und 1 handeln oder bei Verwendung einer hexadezimalen Adresse um die Zeichen 0, 1,... E, F.

Im Falle beispielsweise der Verwendung einer binär kodierten Adresse und bei Vorhandensein nur eines variablen Zeichens hat das erfindungsgemäße Verfahren zur Folge, dass mit der Adresse zwei jeweils unterschiedlichen Empfängern zugeordnete Adressen bestimmt werden, nämlich einerseits die Adresse des einen Empfängers, die sich bei Verwendung des Wertes 0 für das variable Zeichen ergibt, und andererseits die Adresse des anderen Empfängers, die sich bei Verwendung des Wertes 1 für das variable Zeichen ergibt. Nachdem die Netzwerkkomponente unter gemeinsamer Berücksichtigung des ersten und zweiten Adressteils die Empfängeradressen bestimmt hat, überträgt sie die elektronische Nachricht an die den derart bestimmten Empfängeradressen zugeordneten Empfänger. Dabei ist zu beachten, dass die Übertragung von der Netzwerkkomponente aus nicht unmittelbar an den Empfänger erfolgen muss, sondern die elektronische Nachricht auch zunächst an zumindest eine weitere zwischengeschaltete Netzwerkkomponente übertragen werden kann, welche die weitere Übertragung der elektronischen Nachricht an den eigentlichen Empfänger durchführt.

Sowohl bei dem Sender als auch bei den einzelnen Empfängern im Sinne der vorliegenden Erfindung kann es sich beispielsweise jeweils um ein Endgerät, wie etwa einen stationären oder mobilen Computer, ein Mobilfunktelefon oder ein beliebiges sonstiges über eine Festnetzverbindung oder eine Luftschnittstelle an ein Kommunikationsnetzwerk angeschlossenes Endgerät handeln. Darüber hinaus kann es sich bei dem Sender und/oder den einzelnen Empfängern jedoch auch jeweils um einen Netzknoten handeln. Dabei kann der jeweilige Empfänger in Form des jeweiligen Netzknotens entweder in demselben Kommunikationsnetzwerk wie der Sender oder aber auch in einem anderen Kommunikationsnetzwerk angeordnet sein.

Dem Sender wird es durch das erfindungsgemäße Verfahren vorteilhafterweise ermöglicht, auch dann eine im Zusammenhang mit der Übermittlung einer elektronischen Nachricht zu verwendende Adresse anzugeben, wenn ihm die genauen Empfängeradressen nicht bekannt sind. Entsprechende nicht bekannte Zeichen der Adresse können erfindungsgemäß als variabel gekennzeichnet werden, wodurch die elektronische Nachricht an alle auf diese Weise vorbestimmten Empfänger gesendet wird.

Das erfindungsgemäße Verfahren bietet darüber hinaus den Vorteil, dass es die Übertragung inhaltlich identischer Kopien einer elektronischen Nachricht über dieselbe Übertragungsstrecke vermeidet. Stattdessen wird es durch die Art der Adressierung vorteilhafterweise ermöglicht, dass ausschließlich dort, wo sich die Übertragungswege aufgrund der verschiedenen Empfänger teilen, Kopien der elektronischen Nachricht erzeugt werden. Dies entspricht einer Übertragung der elektronischen Nachricht in Form eines Multicast-Verfahrens und bedeutet insbesondere auch, dass vorteilhafterweise die auf Seiten des Senders für die Übertragung der elektronischen Nachricht benötigte Bandbreite nicht mit der Zahl der Empfänger skaliert.

Sofern der Aufbau der verwendeten Adressen einen geographischen Bezug aufweist, beispielsweise dadurch, dass ein Teil der Zeichen der Adresse ein Land, eine Region, eine Stadt, ein Kommunikationsnetzwerk oder mehrere Kommunikationsnetzwerke kennzeichnet, so können mittels des erfindungsgemäßen Verfahrens vorteilhafterweise Empfänger in vorbestimmten lokalen Bereichen adressiert werden. Hierdurch wird es beispielsweise ermöglicht, eine elektronische Nachricht an alle Netzknoten einer vorbestimmten Region zu übermitteln.

In einer vorteilhaften Ausführungsform ist das erfindungsgemäße Verfahren derart ausgestaltet, dass der erste Adressteil lediglich diejenigen Zeichen der Adresse umfasst, deren Werte invariabel sind, und der zweite Adressteil diejenigen Zeichen der Adresse kennzeichnet, deren Werte variabel sind. Entsprechend den vorherigen Ausführungen im Zusammenhang mit dem erfindungsgemäßen Verfahren zum Erzeugen eines Adressfeldes ist diese Ausführungsform bevorzugt, da sie die Übertragung solcher Zeichen des ersten Adressteils vermeidet, die durch den zweiten Adressteil als variabel gekennzeichnet sind.

In einer weiteren bevorzugten Ausführungsform des erfindungsgemäßen Verfahrens wird als elektronische Nachricht eine Signalisierungsnachricht verwendet. Dabei wird erfindungsgemäß als Signalisierungsnachricht eine solche elektronische Nachricht bezeichnet, die einer Steuerung oder Interaktion zwischen verschiedenen Komponenten eines Kommunikationsnetzwerkes oder mehrerer Kommunikationsnetzwerke dient. Bei solchen Komponenten kann es sich beispielsweise um Netzknoten oder auch um Endgeräte innerhalb eines Kommunikationsnetzwerkes handeln. Beispiele für Signalisierungsnachrichten sind Nachrichten zum Aufbau oder Abbau einer Kommunikationsverbindung oder zum Erfragen von Nutzerdaten von einer Netzwerkkomponente.

Vorteilhafterweise ist das erfindungsgemäße Verfahren derart ausgebildet, dass als Sender und Empfänger Netzknoten eines Kommunikationsnetzwerkes und/oder verschiedener Kommunikationsnetzwerke verwendet werden. Diese Ausführungsform des erfindungsgemäßen Verfahrens ist bevorzugt, da sie beim Übertragen einer elektronischen Nachricht von einem Netzknoten eines Kommunikationsnetzwerkes an mehrere Netzknoten desselben oder weiterer Kommunikationsnetzwerke eine einfache und effiziente Art der Adressierung und der Nachrichtenübertragung ermöglicht.

Vorzugsweise kann das erfindungsgemäße Verfahren auch derart ausgestaltet sein, dass der Netzschicht (Network Layer) zugeordnete Adressen als Adressen der Empfänger verwendet werden. Bei der Netzschicht, welche auch als Vermittlungsschicht oder Paketebene bezeichnet wird, handelt es sich gemäß dem OSI (O-pen Systems Interconnection)-Referenzmodell um die Schicht, welche bei leitungsvermittelten Diensten für das Schalten von Verbindungen und bei paketvermittelten Diensten für die Weitervermittlung von Datenpaketen verantwortlich ist. Die Verwendung von der Netzschicht zugeordneten Adressen als Adressen der Empfänger ist bevorzugt, da hierdurch auf Ebene der Netzschicht Multicast ermöglicht wird. Im Gegensatz zu auf der Sicherungsschicht (Data Link Layer) ablaufenden Multicast-Verfahren bietet dies den Vorteil, dass die verschiedenen Empfänger der elektronischen Nachricht nicht notwendigerweise über ein gemeinsames Übertragungsmedium miteinander verbunden sein müssen. Somit wird vorteilhafterweise eine netzwerkübergreifende Übertragung einer elektronischen Nachricht mittels eines Multicast-Verfahrens ermöglicht.

Bei der elektronischen Nachricht kann es sich vorzugsweise auch um ein Datenpaket in einem paketvermittelten Kommunikationsnetzwerk handeln. In einer besonders bevorzugten Ausführungsform läuft das erfindungsgemäße Verfahren so ab, dass als elektronische Nachricht ein IP (Internetprotokoll)-Paket verwendet wird. Diese Ausführungsform des erfindungsgemäßen Verfahrens ist vorteilhaft, da es sich bei dem Internetprotokoll um ein weit verbreitetes Kommunikationsprotokoll zur paketvermittelten Datenübertragung handelt. Dabei können im Rahmen der Übertragung von Daten oder einer Signalisierungsnachricht mehrere beziehungsweise eine Vielzahl von IP-Paketen inhaltlich zusammengehören, d. h. in diesem Fall sendet der Sender eine Vielzahl zusammengehörender elektronischer Nachrichten in Form von IP-Paketen an die Empfänger.

In einer weiteren bevorzugten Ausführungsform ist das erfindungsgemäße Verfahren derart ausgestaltet, dass als erster Adressteil die im Header des IP-Paketes in dem Datenfeld "Source Address" beinhaltete IP-Adresse des Senders verwendet wird und der zweite Adressteil in einem im Header des IP-Paketes für die IP-Adresse des Empfängers vorgesehenen Datenfeld "Destination Address" übertragen wird. Diese Ausführungsform bietet den Vorteil, dass sie leicht verständlich und in ihrer Implementierung einfach ist. Insbesondere sind nur geringfügige Änderungen oder Erweiterungen bezüglich der Verarbeitung und Implementierung des Internetprotokolls erforderlich. Allerdings ergeben sich bei dieser Ausführungsform gewisse Einschränkungen hinsichtlich der Flexibilität bei der Festlegung der Empfänger, da der erste Adressteil durch die IP-Adresse des Senders festgelegt ist.

Das erfindungsgemäße Verfahren kann auch so ablaufen, dass im Header des IP-Paketes ein neues Datenfeld eingerichtet wird und der erste Adressteil in dem neuen Datenfeld und der zweite Adressteil in dem im Header des IP-Paketes für die IP-Adresse des Empfängers vorgesehenen Datenfeld "Destination Address" übertragen wird. Diese Ausführungsform des erfindungsgemäßen Verfahrens bietet den Vorteil, dass sie keinerlei Einschränkungen hinsichtlich der möglichen Empfänger nach sich zieht. Allerdings ist zu berücksichtigen, dass ein gewisser Aufwand für die entsprechende Anpassung sowohl des Internetprotokolls als auch von Anwendungen des Internetprotokolls erforderlich ist.

Weiterhin kann das erfindungsgemäße Verfahren vorteilhafterweise auch so ausgestaltet sein, dass als erste Hälfte des ersten Adressteils die erste Hälfte des im Header des IP-Paketes für die IP-Adresse des Senders vorgesehenen Datenfeldes "Source Address" verwendet wird, die zweite Hälfte des ersten Adressteils in der ersten Hälfte des im Header des IP-Paketes für die IP-Adresse des Empfängers vorgesehenen Datenfeldes "Destination Address" und ein auf seine zweite Hälfte reduzierter zweiter Adressteil in der zweiten Hälfte des im Header des IP-Paketes für die IP-Adresse des Empfängers vorgesehenen Datenfeldes "Destination Address" übertragen wird. Bei dieser Ausführungsform des erfindungsgemäßen Verfahrens wird auf eine Übertragung einer der ersten Hälfte des ersten Adressteils entsprechenden ersten Hälfte des zweiten Adressteils verzichtet, d. h. alle Zeichen der ersten Hälfte des ersten Adressteils sind invariabel, d. h. die entsprechenden Zeichen der Adresse sind durch die betreffenden Zeichen des ersten Adressteils festgelegt. Diese Ausführungsform bietet den Vorteil, dass sie einerseits flexibel ist, andererseits aber auch leicht verständlich ist und wenig Änderungen oder Erweiterungen hinsichtlich der Implementierung des Internetprotokolls oder hinsichtlich der Implementierung von Anwendungen des Internetprotokolls erfordert.

In einer weiteren bevorzugten Ausführungsform läuft das erfindungsgemäße Verfahren so ab, dass ein vorbestimmter Wert des "IP Router Alert Option"-Parameters des Headers des IP-Paketes als Kennzeichen für die Verwendung einer aus dem ersten und dem zweiten Adressteil bestehenden Adresse benutzt wird. Bei dem vorbestimmten Wert kann es sich beispielsweise um den Wert 65535 handeln. Der Parameter "IP Router Alert Option" wird allgemein dazu verwendet, um einer Netzwerkkomponente, beispielsweise in Form eines Routers, anzuzeigen, dass das betreffende IP-Paket besondere Beachtung erfahren soll. Im Rahmen dieser vorteilhaften Weiterbildung des erfindungsgemäßen Verfahrens kann der Netzwerkkomponente mittels dieses Parameters angezeigt werden, dass es sich bei der empfangenen Adresse nicht um eine übliche Adresse, sondern um eine solche gemäß dem erfindungsgemäßen Verfahren handelt und somit eine entsprechende Verarbeitung durch die Netzwerkkomponente erforderlich ist.

Die Erfindung betrifft darüber hinaus eine Vorrichtung zur Übertragung einer elektronischen Nachricht.

Bezüglich der Vorrichtung liegt der vorliegenden Erfindung die Aufgabe zugrunde, eine Vorrichtung anzugeben, die eine einfache und flexible Übertragung einer elektronischen Nachricht von einem Sender an mehrere Empfänger ermöglicht.

Diese Aufgabe wird erfindungsgemäß gelöst durch eine Vorrichtung zur Übertragung einer elektronischen Nachricht von einem Sender an mehrere Empfänger mit einer Nachrichtenempfangseinrichtung zum Empfangen der elektronischen Nachricht mit mindestens einer Adresse, die derart aus einem ersten und einem zweiten jeweils aus einer Kette mit mehreren Zeichen bestehenden Adressteil besteht, dass der zweite Adressteil diejenigen Zeichen der Adresse kennzeichnet, deren Werte invariabel durch das betreffende Zeichen des ersten Adressteils festgelegt sind, und/oder diejenigen Zeichen der Adresse kennzeichnet, deren Werte variabel sind, Zusammenfügen des ersten und des zweiten Adressteils zu der Adresse, wobei der erste Adressteil lediglich diejenigen Zeichen der Adresse umfasst, deren Werte invariabel sind, einer mit der Nachrichtenempfangseinrichtung verbundenen Adressbestimmungseinrichtung zum Bestimmen von Empfängeradressen durch jeweiliges Variieren der gemäß dem zweiten Adressteil in ihren Werten variablen Zeichen innerhalb einer vorbestimmten Menge möglicher Werte der Zeichen und einer Nachrichtenübertragungseinrichtung zur Weiterleitung der elektronischen Nachricht an die den bestimmten Empfängeradressen zugeordneten Empfänger.

Die erfindungsgemäße Vorrichtung, die beispielsweise in Form eines Routers realisiert werden kann, ist vorteilhaft, da sie mittels der Nachrichtenempfangseinrichtung derart ausgebildet ist, dass sie aus der aus dem ersten und dem zweiten Adressteil bestehenden Adresse durch jeweiliges Variieren der in ihren Werten variablen Zeichen innerhalb einer vorbestimmten Menge möglicher Werte der Zeichen die Bestimmung der Empfängeradressen erlaubt. Mittels der Nachrichtenübertragungseinrichtung ist dann eine Weiterleitung beziehungsweise eine Übertragung der elektronischen Nachricht an die den bestimmten

Empfängeradressen zugeordneten Empfänger möglich. Dabei kann die Weiterleitung durch die Nachrichtenübertragungseinrichtung unmittelbar an die den bestimmten Empfängeradressen zugeordneten Empfänger erfolgen, oder aber mittelbar über eine oder mehrere weitere Vorrichtungen, welche zur Übertragung der elektronischen Nachricht auf dem Übertragungsweg von dem Sender zu dem betreffenden Empfänger angeordnet ist bzw. sind.

Vorzugsweise weist die erfindungsgemäße Vorrichtung eine mit der Adressebestimmungseinrichtung verbundene Adresszusammenfassungseinrichtung mit Mitteln zum Zusammenfassen von mehreren Empfängeradressen zu einer neuen Empfängeradresse, die aus einem ersten und einem zweiten jeweils einer Kette mit mehreren Zeichen bestehenden Adressteil aufgebaut ist, auf. Dies bietet den Vorteil, dass wiederum mittels einer aus dem ersten und dem zweiten Adressteil bestehenden Adresse mehrere Empfänger adressiert werden können, wodurch die elektronische Nachricht vorteilhafterweise in Form eines Multicast-Verfahrens übertragen werden kann.

In einer weiteren bevorzugten Ausführungsform weist die erfindungsgemäße Vorrichtung Mittel zur Berücksichtigung von Informationen zur Wegelenkung (Routing) beim Zusammenfassen der mehreren Empfängeradressen auf. Hierdurch wird es der Adressenzusammenfassungseinrichtung vorteilhafterweise ermöglicht, mehrere Empfängeradressen derart zu einer neuen Adresse oder mehreren neuen Adressen zusammenzufassen, dass in der Adresse oder den Adressen alle zu derselben nächsten Netzwerkkomponente weiterzuleitende Empfängeradressen zusammengefasst sind.

Die Erfindung betrifft des Weiteren ein Datenpaket.

Bezüglich des Datenpaketes liegt der vorliegenden Erfindung die Aufgabe zugrunde, ein Datenpaket anzugeben, welches auf einfache und flexible Art und Weise an mehrere Empfänger übertragen werden kann.

Diese Aufgabe wird erfindungsgemäß gelöst durch ein Datenpaket mit einem ersten und einem zweiten jeweils aus einer Kette mit mehreren Zeichen bestehenden Adressteil, welche gemeinsam die Empfänger des Datenpaketes festlegen,
wobei der zweite Adressteil diejenigen Zeichen einer Adresse kennzeichnet, deren werte invariabel durch das betreffende Zeichen des ersten Adressteils festgelegt sind, und/oder diejenigen Zeichen der Adresse kennzeichnet, deren Werte variabel sind, und dass der erste Adressteil lediglich diejenigen Zeichen der Adresse umfasst, deren werte invariabel sind.

Das erfindungsgemäße Datenpaket ist vorteilhaft, da es eine vereinfachte Adressierung ermöglicht, durch welche einerseits dem Sender des Datenpaketes nicht alle Empfängeradressen explizit bekannt sein müssen und andererseits eine vorteilhafte Übertragung des Datenpaketes mittels eines Multicast-Verfahrens ermöglicht wird, bei dem eine unnötige Übertragung von Kopien des Datenpaketes auf derselben Übertragungsstrecke vermieden wird.

In einer bevorzugten Weiterbildung weist der Header des erfindungsgemäßen Datenpaketes eine Markierung als Kennzeichen für die Verwendung von aus dem ersten und dem zweiten Adressteil bestehenden Empfängeradressen auf. Dies ist vorteilhaft, da es hierdurch das Datenpaket empfangenden Netzwerkkomponenten ermöglicht wird, anhand des betreffenden Datenpaketes zu erkennen, dass es sich bei dem Datenpaket um ein solches handelt, welches eine aus einem ersten und einem zweiten Adressteil bestehende Adresse aufweist.

Vorteilhafterweise ist das erfindungsgemäße Datenpaket ein IP (Internetprotokoll)-Paket. Diese Ausführungsform ist bevorzugt, da es sich bei dem Internetprotokoll um ein weit verbreitetes Protokoll zur Übertragung von Datenpaketen in paketvermittelten Kommunikationsnetzwerken handelt.

Vorzugsweise ist das erfindungsgemäße Datenpaket derart ausgestaltet, dass das IP-Paket in einem für die IP-Adresse des Senders vorgesehenen Datenfeld "Source Address" den ersten Adressteil und in einem für die IP-Adresse des Empfängers vorgesehenen Datenfeld "Destination Address" den zweiten Adressteil aufweist. Dies ist vorteilhaft, da es eine Übertragung des ersten und des zweiten Adressteils in dem IP-Paket auf einfache Art und Weise ermöglicht. Wie im Zusammenhang mit dem Verfahren zur Übertragung einer elektronischen Nachricht bereits erläutert bedingt dies, dass der erste Adressteil mit der IP-Adresse des Senders identisch ist. Dies gilt zumindest unter der sinnvollen Annahme, dass die Übertragung der IP-Adresse des Senders in dem IP-Paket zwingend erforderlich ist.

Das erfindungsgemäße Datenpaket kann weiterhin auch derart ausgebildet sein, dass das IP-Paket in einem neuen Datenfeld im Header den ersten Adressteil und in dem für die IP-Adresse des Empfängers vorgesehenen Datenfeld "Destination Address" den zweiten Adressteil aufweist. Hierdurch wird vorteilhafterweise eine uneingeschränkte Flexibilität hinsichtlich der Werte des ersten und des zweiten Adressteils ermöglicht. Dies bedeutet, dass es keinerlei Abhängigkeiten zwischen den Werten der beiden Adressteile und denjenigen sonstiger in dem IP-Paket übertragener Adressen gibt.

Vorzugsweise ist das erfindungsgemäße Datenpaket derart ausgeprägt, dass das IP-Paket in der ersten Hälfte des für die IP-Adresse des Senders vorgesehenen Datenfeldes "Source Address" die erste Hälfte des ersten Adressteils, in der ersten Hälfte des für die IP-Adresse des Empfängers vorgesehenen Datenfeldes "Destination Address" die zweite Hälfte des ersten Adressteils und in der zweiten Hälfte des für die IP-Adresse des Empfängers vorgesehenen Datenfeldes "Destination Address" einen auf seine zweite Hälfte reduzierten zweiten Adressteil aufweist. Wie zuvor bereits erläutert, bedingt diese vorteilhafte Ausführungsform gewisse Abhängigkeiten, da die erste Hälfte des zweiten Adressteils vorzugsweise entfällt. Die hieraus resultierende gewisse Einschränkung bei der Festlegung der Adresse sollte jedoch im Vergleich zu dem bedeutenden Vorteil, dass die Einführung eines entsprechenden IP-Paketes mit relativ geringem Aufwand erfolgen kann, nur von geringer Bedeutung sein.

In einer weiteren bevorzugten Ausführungsform des erfindungsgemäßen Datenpaketes ist die Markierung ein vorbestimmter Wert des "IP Router Alert Option"-Parameters. Hierdurch wird eine entsprechende Markierung des IP-Paketes vorteilhafterweise auf einfache Art und Weise, d. h. insbesondere ohne die Einführung eines zusätzlichen Parameters, ermöglicht.

Vorzugsweise ist das erfindungsgemäße Datenpaket nach IPv4- oder IPv6-Vorgaben aufgebaut. Dies ist vorteilhaft, da es sich bei diesen beiden Versionen des Internetprotokolls um die derzeit gängigen und damit weit verbreiteten Internetprotokoll-Standards handelt.

Zur weiteren Erläuterung zeigt
- Figur 1: eine schematische Darstellung zur Erläuterung des Ablaufs eines Ausführungsbeispiels des erfindungsgemäßen Verfahrens zum Erzeugen eines Adressfeldes,
- Figur 2: in einer schematischen Skizze ein Flussdiagramm zur Erläuterung eines Ausführungsbeispiels der erfindungsge- mäßen Anordnung sowie eines Ausführungsbeispiels des erfindungsgemäßen Verfahrens zur Übertragung einer elektronischen Nachricht und
- Figur 3: in einer.schematischen Skizze anhand eines Ausführungsbeispiels des erfindungsgemäßen Datenpaketes die Bestimmung der Empfängeradressen durch ein Ausführungsbeispiel der erfindungsgemäßen Vorrichtung zur Übertragung einer elektronischen Nachricht.

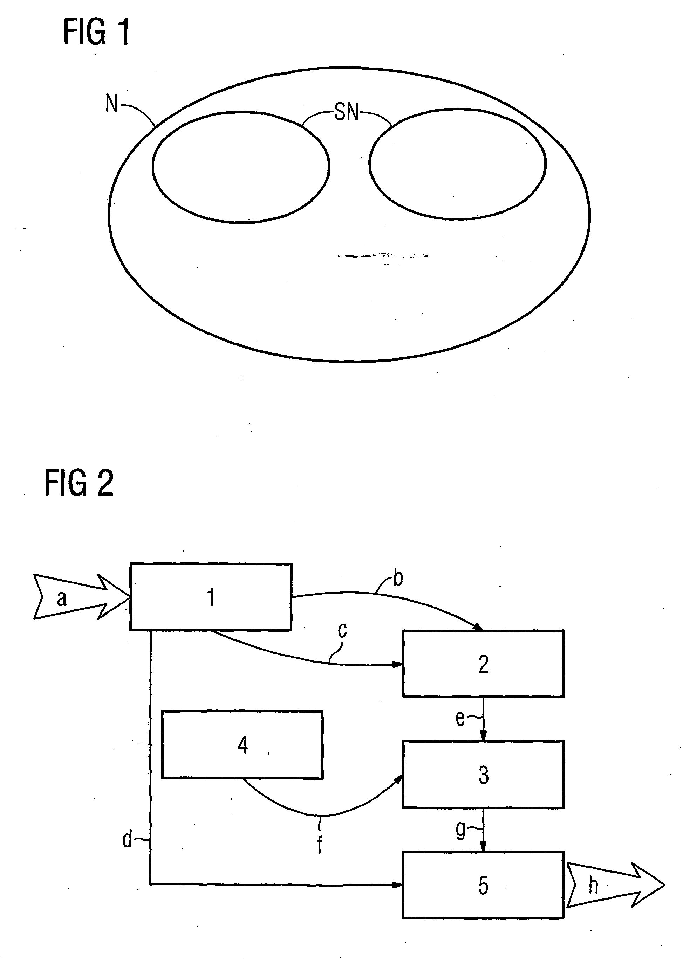

Figur 1 zeigt eine schematische Darstellung zur Erläuterung des Ablaufs eines Ausführungsbeispiels des erfindungsgemäßen Verfahrens zum Erzeugen eines Adressfeldes.

Das erfindungsgemäße Verfahren zur Erzeugung eines Adressfeldes kann vorteilhafterweise insbesondere in solchen Fällen verwendet werden, in denen einem Sender lediglich ein lokaler Bereich bzw. ein Adressbereich bekannt ist, in welchem sich von ihm vorbestimmte Empfänger einer elektronischen Nachricht zu dem Zeitpunkt, zu dem die elektronische Nachricht gesendet wird, aufhalten bzw. möglicherweise aufhalten.

Die Empfänger werden dabei vorteilhafterweise mittels Empfängeradressen der so genannten Netzschicht, wie beispielsweise IP-Adressen, adressiert. Dabei kann eine Adresse der Netzschicht üblicherweise als eine Kette von Zeichen dargestellt werden. Beispiele hierfür sind aus den Zeichen 0 und 1 oder aus den Zeichen 0, 1 ..., F bestehende Ketten von Zeichen.

Das erfindungsgemäße Verfahren zum Erzeugen eines Adressfeldes ermöglicht es nun, die Empfänger einer elektronischen Nachricht mittels eines ersten und eines zweiten Adressteils festzulegen. Dabei werden der erste und der zweite Adressteil derart definiert, dass die Möglichkeit besteht, bestimmte Zeichen oder Abschnitte aus mehreren Zeichen der Empfängeradressen festzulegen und andere Zeichen oder Abschnitte aus mehreren Zeichen als variabel zu kennzeichnen. So kann beispielsweise der erste Adressteil durch die aus mehreren Zeichen bestehende Kette 101010 und der zweite Adressteil durch die aus mehreren Zeichen bestehende Kette 110110 gegeben sein. Dabei kennzeichnet eine 1 an einer Stelle des zweiten Adressteils, dass das Zeichen an der entsprechenden Stelle des ersten Adressteils invariabel ist, d. h. die betreffende Stelle der Adresse festlegt. Demgegenüber bedeutet eine 0 an einer Stelle des zweiten Adressteils, dass das Zeichen an der betreffenden Stelle der Adresse variabel sein soll. Somit definieren der erste und der zweite Adressteil einen Satz von Empfängeradressen auf der Netzschicht, wobei die Empfängeradressen an den Stellen, an denen der zweite Adressteil eine 1 aufweist, dem Zeichen des ersten Adressteils an dieser Stelle entsprechen, während die Empfängeradressen an den Stellen, an denen der zweite Adressteil eine 0 aufweist, einen beliebigen anderen gültigen Wert aufweisen können.

Dies hat zur Folge, dass durch die Verwendung variabler Zeichen mittels des ersten und des zweiten Adressteils gleichzeitig mehrere Empfänger der elektronischen Nachricht definiert werden können. In dem zuvor aufgeführten Beispiel werden durch den ersten und den zweiten Adressteil die folgenden Empfängeradressen definiert: 100010, 100011, 101010 und 101011. Dabei ist für den zweiten Adressteil grundsätzlich die Verwendung von zwei unterschiedlichen Zeichen ausreichend, da lediglich angegeben werden muss, ob das entsprechende Zeichen des ersten Adressteils den Wert der Adresse an der betreffenden Stelle festlegt oder nicht.

Die Definition mehrerer Empfängeradressen durch den ersten und den zweiten Adressteil ist insbesondere im Zusammenhang mit einem Multicast-Verfahren vorteilhaft, bei dem identische Kopien derselben Nachricht an mehrere Empfänger übertragen werden sollen. Dabei ergibt sich aus dem ersten und dem zweiten Adressteil vorteilhafterweise gleichzeitig eine bevorzugte Vorgehensweise zur Übertragung der elektronischen Nachricht. Ursache hierfür ist, dass sich die Empfängeradressen aller Empfänger bzw. potenziellen Empfänger der elektronischen Nachricht, bei der es sich beispielsweise um eine Signalisierungsnachricht handeln kann, in Form eines Verzweigungsbaumes darstellen lassen. Dieser Verzweigungsbaum kann auch zum Zwecke der Wegelenkung, d. h. des so genannten Routings, verwendet werden.

Konkret besteht die Adresse in dem zuvor beschriebenen Beispiel, bei dem der erste Adressteil durch 101010 und der zweite Adressteil durch 110110 gegeben ist, aus zwei jeweils durch den ersten Adressteil vorbestimmten, d. h. invariablen, Abschnitten von Zeichen (Zeichen 1 und 2 sowie Zeichen 4 und 5) und aus zwei variablen Zeichen (Zeichen 3 und 6). In diesem Fall können die invariablen Zeichen, d. h. im vorliegenden Beispiel Bits, des ersten Abschnitts beispielsweise einen durch ein Kommunikationsnetzwerk N vorgegebenen, in Figur 1 durch die große Ellipse angedeuteten Bereich festlegen. Jeder weitere aus einem oder mehreren Zeichen bestehende Abschnitt von invariablen Bits definiert nun neue geografische Bereiche bzw. logische Adressbereiche innerhalb des Bereichs, der durch die Abfolge der Abschnitte mit invariablen Zeichen vor diesem invariablen Abschnitt der Adresse bestimmt wird. Bezüglich des aufgeführten Beispiels bedeutet dies, dass mittels des zweiten Adressteils die beiden ersten Zeichen des ersten Adressteils als invariabel gekennzeichnet werden. Somit definiert der erste Adressteil einen Bereich eines Kommunikationsnetzwerkes N, welcher alle Empfängeradressen "10xxxx", d. h. alle mit "10" beginnenden Empfängeradressen, beinhaltet. Anschließend folgt gemäß dem zweiten Adressteil ein variables Bit, an welches sich wiederum zwei invariable Bits anschließen. Diese definieren zwei Unternetzbereiche SN innerhalb des durch die ersten beiden invariablen Bits festgelegten Bereichs des Kommunikationsnetzwerkes N, d. h. die Empfängeradressen "10010x" und "10110x". Die diesen Adressen entsprechende Bereiche sind der Figur 1 als Unternetzbereiche SN in Form von zwei kleinen Ellipsen dargestellt.

Es sei darauf hingewiesen, dass verschiedenste Ausführungsformen der konkreten Implementierung des ersten und des zweiten Adressteils möglich sind. So muss es sich beispielsweise bei dem ersten Adressteil nicht um eine komplette Adresse der Netzschicht handeln, sondern es können auch lediglich diejenigen Zeichen der Adresse, die invariabel sind, angegeben werden. Darüber hinaus ist es weiterhin auch denkbar, dass die Adresse aus mehreren ersten Adressteilen und/oder mehreren zweiten Adressteilen besteht. Dies ist so zu verstehen, dass sich in diesem Fall die Empfängeradressen beispielsweise aus einer Kombination von allen ersten mit jeweils allen zweiten Adressteilen ergeben können, wobei die einzelnen Kombinationen jeweils nach dem zuvor beschriebenen Verfahren durchgeführt werden. Somit stellen die letztlich resultierenden Empfängeradressen die Gesamtheit der sich aus den einzelnen Kombinationen der ersten und der zweiten Adressteile ergebenden Empfängeradressen dar.

Figur 2 zeigt in einer schematischen Skizze ein Flussdiagramm zur Erläuterung eines Ausführungsbeispiels der erfindungsgemäßen Anordnung sowie eines Ausführungsbeispiels des erfindungsgemäßen Verfahrens zur Übertragung einer elektronischen Nachricht. Dabei sind in Figur 2 verschiedene Komponenten der Vorrichtung in Form eines Blockdiagramms dargestellt und die Pfeile zwischen diesen Blöcken zeigen die Schritte bzw. den Nachrichten- oder Informationsfluss beim Ablauf einer Ausführungsform des erfindungsgemäßen Verfahrens an. Es sei darauf hingewiesen, dass es sich bei den in Figur 2 dargestellten Komponenten im Wesentlichen um logische Komponenten handelt, d. h. unterschiedliche Komponenten müssen nicht notwendigerweise auch durch separate Hard- oder Softwarekomponenten realisiert sein.

Der große Pfeil links oben in Figur 2 deutet das Empfangen a einer elektronischen Nachricht an. Bei einer solchen elektronischen Nachricht kann es sich sowohl um eine solche handeln, die bereits von einer anderen Netwerkkomponente weitergeleitet worden ist, als auch um eine solche, die in der dargestellten Vorrichtung ihren Ursprung hat. Dabei kann es sich bei der elektronischen Nachricht beispielsweise um eine von einem Nutzer eines Endgerätes erzeugte Nachricht oder aber um eine im Rahmen eines Programmablaufs auf der Vorrichtung erzeugte Nachricht handeln.

Die in Verfahrensschritt a eingehende elektronische Nachricht wird von einer Nachrichtenempfangseinrichtung 1 Empfangen, welche die in dem Header der elektronischen Nachricht eingefügten Adresse bzw. Adressen analysiert. Sofern die elektronische Nachricht ein gemäß dem erfindungsgemäßen Verfahren zum Erzeugen eines Adressfeldes aufgebautes Adressfeld aufweist, d. h. eine Adresse, die aus einem ersten und einem zweiten Adressteil aus jeweils einer Kette mit mehreren Zeichen besteht, derart, dass der zweite Adressteil diejenigen Zeichen der Adresse kennzeichnet, deren Werte invariabel durch das betreffende Zeichen des ersten Adressteils festgelegt sind, und/oder diejenigen Zeichen der Adresse bestimmt, deren Werte variabel sind, leitet die Nachrichtenempfangseinrichtung 1 den ersten Adressteil in einem Verfahrensschritt b und den zweiten Adressteil in einem Verfahrensschritt c an eine Adressbestimmungseinrichtung 2 weiter. Obwohl die entsprechende Weiterleitung in Figur 2 zum besseren Verständnis in Form von zwei separaten Verfahrensschritten b und c dargestellt ist, kann sie selbstverständlich auch in Form eines gemeinsamen Verfahrensschrittes erfolgen.

Der eigentliche Text der elektronischen Nachricht wird in Verfahrensschritt d von der Nachrichtenempfangseinrichtung 1 an eine Nachrichtenübertragungseinrichtung 5 weitergeleitet.

Unter Verwendung des ersten und des zweiten Adressteils bestimmt die Adressbestimmungseinrichtung 2 die Empfängeradressen aller durch den ersten und den zweiten Adressteil vorbestimmten Empfänger. Diese Empfängeradressen leitet die Adressbestimmungseinrichtung 2 in Verfahrensschritt e an eine Adresszusammenfassungseinrichtung 3 weiter, welche Mittel zum Zusammenfassen von mehreren Empfängeradressen zu einer neuen Adresse, die aus einem ersten und einem zweiten jeweils aus einer Kette mit mehreren Zeichen bestehender Adressteil aufgebaut ist, aufweist.

Die Adresszusammenfassungseinrichtung 3 fasst die Empfängeradressen derart zusammen, dass alle Empfängeradressen, die an denselben nächsten Router weitergeleitet werden sollen, zu einer neuen aus einem ersten und einem zweiten Adressteil bestehenden Adresse zusammengefasst werden. Dabei ist es auch möglich, dass die zusammenzufassenden Empfängeradressen in mehrere aus einem ersten und einem zweiten Adressteil bestehenden Adressen zusammengefasst werden, oder dass einzelne oder mehrere der Empfängeradressen nicht zusammengefasst werden können und deshalb in Form vollständig bestimmter, nicht aus einem ersten und einem zweiten Teil bestehenden Empfängeradresse erhalten bleiben. Für den Fall, dass lediglich eine einzelne Empfängeradresse an den nächsten Router oder Host weitergeleitet werden soll, ist die Bestimmung einer aus einem ersten und einen zweiten Adressteil bestehender Adresse nicht erforderlich.

Die neu bestimmte Adresse bzw. die neu bestimmten Adressen und/oder einzelne einfache Empfängeradressen werden von der Adresszusammenfassungseinrichtung 3 in Verfahrensschritt g an die Nachrichtenübertragungseinrichtung 5 übermittelt.

Die Aufgabe der in Figur 2 ebenfalls dargestellten Mittel zur Berücksichtigung von Informationen zur Wegelenkung 4 besteht darin, in Verfahrensschritt f der Adresszusammenfassungseinrichtung 3 benötigte Routing-Informationen zu Verfügung zu stellen. Dabei enthalten die Routing-Informationen vorzugsweise für die Adresse bzw. die Adressen und/oder für jede der Empfängeradressen das Routing, d. h. die Wegelenkung, betreffende Entscheidungen sowie Informationen etwa hinsichtlich der Adresse des nächsten Routers, an den die Weiterleitung erfolgen soll. Der genaue Inhalt und die genaue Art der Routing-Informationen sind dabei maßgeblich von dem verwendeten Routing-Algorithmus abhängig.

Nach Empfang der elektronischen Nachricht in Verfahrensschritt d und der neuen Adressen in Verfahrensschritt g ersetzt die Nachrichtenübertragungseinrichtung 5 die alte Adresse in der elektronischen Nachricht durch die neue aus ei-. nem ersten und einem zweiten Adressteil bestehenden Adresse beziehungsweise die entsprechenden neuen Adressen und/oder die neue Empfängeradresse bzw. Empfängeradressen und übermittelt die elektronische Nachricht in Verfahrensschritt h an den entsprechenden nächsten Router oder Empfänger. Dabei ändert sich der eigentliche Inhalt der elektronischen Nachricht im Vergleich zu der in Schritt a empfangenen Nachricht nicht.

Der zuvor beschriebene Verfahrensablauf ist vorteilhaft, da Kopien der elektronischen Nachrichten grundsätzlich nur für jeden unterschiedlichen nächsten Router oder Empfänger erzeugt werden, wodurch die Übertragung duplizierter elektronischer Nachrichten über denselben Übertragungsweg bzw. dieselbe Übertragungsstrecke vermieden wird.

Wie zuvor bereits erläutert ist es möglich, mehr als eine aus einem ersten und einem zweiten Adressteil bestehende Adresse zur Definition der Bereiche, in welche eine Multicast-Nachricht gesendet werden soll, zu verwenden. Dies gilt insbesondere auch dann, wenn es sich bei der elektronischen Nachricht um eine Signalisierungsnachricht handelt. Dabei ist es bei der Definition der Adresse beziehungsweise der Adressen der elektronischen Nachricht in Form der Multicast-Nachricht weitestgehend unerheblich, ob mehrere aus einem ersten und einem zweiten Adressteil bestehende Adressen in eine elektronische Nachricht eingebunden werden, oder ob mehrere Kopien derselben elektronischen Nachricht erzeugt werden, wobei jede der Kopien in ihren Adressfeld lediglich eine aus einem ersten und einem zweiten Adressteil bestehende Adresse aufweist. Das Verfahren und die zuvor beschriebene Struktur der Vorrichtung, beispielsweise in Form eines Routers bzw. Routing-Prozessors, bleiben unabhängig von der diesbezüglich gewählten Ausführungsform im Wesentlichen gleich.

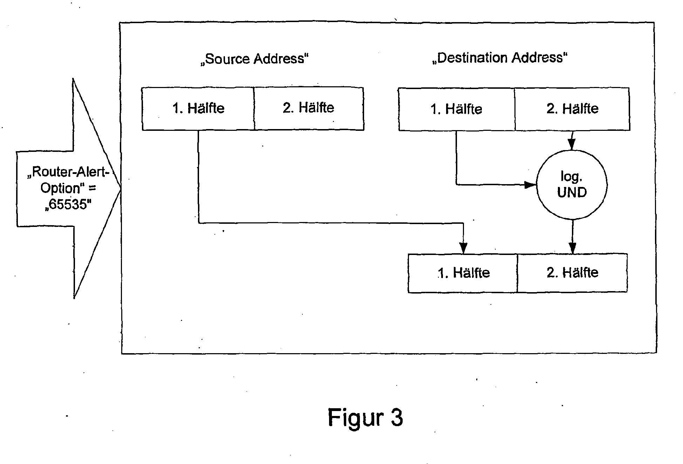

Figur 3 zeigt in einer schematischen Skizze anhand eines Ausführungsbeispiels des erfindungsgemäßen Datenpaketes in Form eines IP-Paketes die Bestimmung der Empfängeradressen durch ein Ausführungsbeispiel der erfindungsgemäßen Vorrichtung zur Übertragung einer elektronischen Nachricht.

Gemäß einer vorteilhaften Ausgestaltung des erfindungsgemäßen Verfahrens weist das IP-Paket in der ersten Hälfte des für die IP-Adresse des Senders vorgesehenen Datenfeldes "Source Address" die erste Hälfte des ersten Adressteils, in der ersten Hälfte des für die IP-Adresse des Empfängers vorgesehenen Datenfeldes "Destination Address" die zweite Hälfte des ersten Adressteils und in der zweiten Hälfte des für die IP-Adresse des Empfänger vorgesehenen Datenfeldes "Destination Address" einen auf seine zweite Hälfte reduzierten zweiten Adressteil auf. Dabei ist generell zu beachten, dass auch eine asymmetrische Verteilung der in den Datenfeldern "Source Address" und "Destination Address" jeweils zu übertragenden Informationen möglich ist, d. h. es ist nicht zwingend erforderlich, dass die beiden "Hälften" bzw. Teile tatsächlich eine identische Länge bzw. Größe aufweisen. Allerdings ist eine entsprechende symmetrische Lösung aufgrund ihrer Einfachheit bevorzugt.

Entsprechend Figur 3 werden bei der dargestellten Ausführungsform die durch den ersten Adressteil festgelegten Zeichen der Adresse derart bestimmt, dass als erste Hälfte der Adresse die erste Hälfte der Adresse des Senders aus dem Datenfeld "Source Address" übernommen wird. Dies bedeutet, dass die erste Hälfte der Adresse keine variablen Zeichen enthält, sondern durch die erste Hälfte des ersten Adressteils, d. h. durch die erste Hälfte des Parameters "Source Address", bestimmt ist.

Wie bereits ausgeführt enthält das ebenfalls im Header des IP-Paketes vorgesehene Datenfeld "Destination Address" in seiner ersten Hälfte die zweite Hälfte des ersten Adressteils und in seiner zweiten Hälfte den auf seine zweite Hälfte reduzierten zweiten Adressteil. Somit ist es möglich, die invariablen Bits der Adresse durch eine bitweise logische "UND"-Verknüpfung der ersten und der zweiten Hälfte des Datenfeldes "Destination Address" zu ermitteln. Dabei ist jedoch zu beachten, dass zur Beantwortung der Frage, ob es sich bei einem Bit um ein variables oder ein invariables Zeichen handelt, die zweite Hälfte des für die IP-Adresse des Empfängers vorgesehenen Datenfeldes benötigt wird. Die entsprechende Information wird dabei insbesondere für das Bestimmen der Empfängeradressen, beispielsweise durch eine Ausführungsform der erfindungsgemäßen Vorrichtung in Form einer Netzwerkkomponente oder eines Routers, durch jeweiliges Variieren der gemäß dem zweiten Adressteil in ihren Werten variablen Zeichen innerhalb einer vorbestimmten Menge möglicher Werte der Zeichen benötigt.

Das im Zusammenhang mit den Figuren beschriebene Verfahren ist insbesondere für die Übertragung von Multicast-Nachrichten in Form von Signalisierungsnachrichten zwischen aus mehreren Netzknoten bestehenden Kommunikationsnetzwerken vorteilhaft. So ist es in der Regel nicht erforderlich, eine Signalisierungsnachricht beispielsweise in Form einer Broadcast-Nachricht an alle Netzknoten eines Kommunikationsnetzwerkes zu übertragen. Stattdessen ist in den meisten Fällen eine Übertragung der Signalisierungsnachricht an bestimmte Netzknoten des Kommunikationsnetzwerkes ausreichend. Eine solche kommunikationsnetzwerkübergreifende Übertragung einer Signalisierungsnachricht ist mittels eines auf der Sicherungsschicht (Link Layer) ablaufenden Multicast-Mechanismus nicht möglich.

Beispielhaft sei angenommen, dass die als Empfänger vorgesehenen Kommunikationsnetzwerke basierend auf der Version IPv4 des Internetprotokolls implementiert sind und in der ersten Hälfte identische Adressen aufweisen. Des Weiteren sei angenommen, dass sich die Kommunikationsnetzwerke auf vier verschiedene Bereiche aufteilen und die Kommunikationsnetzwerke spezielle Netzknoten aufweisen, denen jeweils Empfängeradressen mit vier Bits mit dem Wert "0" am Ende zugewiesen sind. Soll nun an alle diese speziellen Netzknoten eine Signalisierungsnachricht gesendet werden, so kann dies mittels einer entsprechenden Multicast-Nachricht dadurch geschehen, dass für die Multicast-Nachricht eine Adresse definiert wird, welche in hexadezimaler Darstellung einen zweiten Adressteil "FF.FF.F3.8F" aufweist. Dabei definiert der Abschnitt "F3", d. h. die variablen Zeichen beziehungsweise Bits 21 und 22, die Adressen der vier verschiedenen Bereiche. Die variablen Zeichen bzw. Bits 26, 27 und 28 geben die Adressen aller Empfänger in Form der Kömmunikationsnetzwerke in den Bereichen an. Die letzten vier mittels des zweiten Adressteil als invariabel gekennzeichneten Bits werden mittels des ersten Adressteils jeweils auf den Wert "0" festgelegt. Hierdurch wird die Verteilung der Multicast-Nachricht auf die zum Empfang der elektronischen Nachricht vorbestimmten speziellen Netzknoten der Kommunikationsnetzwerke beschränkt.

Es sei darauf hingewiesen, dass das erfindungsgemäße Verfahren vorteilhafterweise in Kombination mit bestehenden oder neuen Multicast-Verfahren auf der Sicherungsschicht, d. h. der Link Layer, verwendet werden kann. So kann auf Ebene der Netzschicht mittels des erfindungsgemäßen Verfahrens beispielsweise eine Signalisierungsnachricht an die betroffenen Netzwerkkomponenten beispielsweise in Form eines Routers oder einer Basisstation übertragen werden. Diese können sich nach vorbestimmten Kriterien, etwa hinsichtlich der Verbesserung von Leistungsmerkmalen, daraufhin dafür entscheiden, ein Multicast-Verfahren auf der Sicherungsschicht für die weitere Übertragung der elektronischen Nachricht an den oder die nächsten Router, Host oder Empfänger zu verwenden.

Generell sei angemerkt, dass weder das beschriebene Verfahren noch die beschriebene Vorrichtung oder die Verwendung des erfindungsgemäßen Datenpaketes in irgendeiner Weise auf bestimmte Arten von Kommunikationsnetzwerken oder bestimmte Protokolle beschränkt ist.

## Patentansprüche

1. Verfahren zum Erzeugen eines Adressfeldes einer elektronischen Nachricht (d) mit den folgenden Schritten:
- Bilden (3) eines ersten und eines zweiten Adressteils aus jeweils einer Kette mit mehreren Zeichen derart, dass der zweite Adressteil diejenigen Zeichen einer Adresse kennzeichnet, deren Werte invariabel durch das betreffende Zeichen des ersten Adressteils festgelegt sind, und/oder diejenigen Zeichen der Adresse kennzeichnet, deren Werte variabel sind, und
- Zusammenfügen (3) des ersten und des zweiten Adressteils zu dem Adressfeld,
wobei der erste Adressteil lediglich diejenigen Zeichen der Adresse umfasst, deren Werte invariabel sind.

2. Verfahren nach Anspruch 1, wobei das Verfahren Teil einer Übertragung einer elektronischen Nachricht in einem Kommunikationsnetzwerk von einem Sender an mehrere Empfänger mit den folgenden Schritten ist:
- Senden (h) der elektronischen Nachricht mit den Adressteilen an eine Netzwerkkomponente, und
- Übertragen der elektronischen Nachricht an bestimmte den Adressen zugeordneten Empfänger.
wobei das Bestimmen der den Empfängern zugeordneten Empfängeradressen in der Netzwerkkomponente durch jeweiliges Variieren der gemäß dem zweiten Adressteil in ihren Werten variablen Zeichen innerhalb einer vorbestimmten Menge möglicher Werte der Zeichen erfolgt.

3. Verfahren nach Anspruch 2,
**dadurch gekennzeichnet, dass**
der erste Adressteil diejenigen Zeichen der Adresse umfasst, deren Werte invariabel sind, und der zweite Adressteil diejenigen Zeichen der Adresse kennzeichnet, deren Werte variabel sind.

4. Verfahren nach einem der Ansprüche 2 oder 3,
**dadurch gekennzeichnet, dass**
als elektronische Nachricht eine Signalisierungsnachricht verwendet wird.

5. Verfahren nach einem der Ansprüche 2 bis 4,
**dadurch gekennzeichnet, dass**
als Sender und Empfänger Netzknoten eines Kommunikationsnetzwerkes (N) und/oder verschiedener Kommunikationsnetzwerke verwendet werden.

6. Verfahren nach einem Ansprüche 2 bis 5,
**dadurch gekennzeichnet, dass**
der Netzschicht (Network Layer) zugeordnete Adressen als Adressen der Empfänger verwendet werden.

7. Verfahren nach einem Ansprüche 2 bis 6,
**dadurch gekennzeichnet, dass**
als elektronische Nachricht ein IP (Internetprotokoll)-Paket verwendet wird.

8. Verfahren nach Anspruch 7,
**dadurch gekennzeichnet, dass**
- als erster Adressteil die im Header des IP-Paketes in dem Datenfeld "Source Address" beinhaltete IP-Adresse des Senders verwendet wird und
- der zweite Adressteil in einem im Header des IP-Paketes für die IP-Adresse des Empfängers vorgesehenen Datenfeld "Destination Address" übertragen wird.

9. Verfahren nach Anspruch 7,
**dadurch gekennzeichnet, dass**
- im Header des IP-Paketes ein neues Datenfeld eingerichtet wird und
- der erste Adressteil in dem neuen Datenfeld und
- der zweite Adressteil in dem im Header des IP-Paketes für die IP-Adresse des Empfängers vorgesehenen Datenfeld "Destination Address" übertragen wird.

10. Verfahren nach Anspruch 7,
**dadurch gekennzeichnet, dass**
- als erste Hälfte des ersten Adressteils die erste Hälfte des im Header des IP-Paketes für die IP-Adresse des Senders vorgesehenen Datenfeldes "Source Address" verwendet wird,
- die zweite Hälfte des ersten Adressteils in der ersten Hälfte des im Header des IP-Paketes für die IP-Adresse des Empfängers vorgesehenen Datenfeldes "Destination Address" und
- ein auf seine zweite Hälfte reduzierter zweiter Adressteil in der zweiten Hälfte des im Header des IP-Paketes für die IP-Adresse des Empfängers vorgesehenen Datenfeldes "Destination Address" übertragen wird.

11. Verfahren nach einem der Ansprüche 7 bis 10,
**dadurch gekennzeichnet, dass**
ein vorbestimmter Wert des "IP Router Alert Option"-Parameters des Headers des IP-Paketes als Kennzeichen für die Verwendung einer aus dem ersten und dem zweiten Adressteil bestehenden Adresse benutzt wird.

12. Vorrichtung zur Übertragung einer elektronischen Nachricht von einem Sender an mehrere Empfänger mit
- einer Nachrichtenempfangseinrichtung (1) zum Empfangen der elektronischen Nachricht (a) mit mindestens einer Adresse, die derart aus einem ersten (b) und einem zweiten (c) jeweils aus einer Kette mit mehreren Zeichen bestehenden Adressteil besteht, dass der zweite Adressteil (c) diejenigen Zeichen der Adresse kennzeichnet, deren Werte invariabel durch das betreffende Zeichen des ersten Adressteils (b) festgelegt sind, und/oder diejenigen Zeichen der Adresse kennzeichnet, deren Werte variabel sind, und Zusammenfügen (3) des ersten und des zweiten Adressteils zu der Adresse, wobei der erste Adressteil lediglich diejenigen Zeichen der Adresse umfasst, deren Werte invariabel sind, und
- einer Nachrichtenübertragungseinrichtung (5) zur Weiterleitung der elektronischen Nachricht an bestimmte den Empfängeradressen zugeordnete Empfänger
wobei in einer mit der Nachrichtenempfangseinrichtung (1) verbundenen Adressbestimmungseinrichtung (2) das Bestimmen von Empfängeradressen durch jeweiliges Variieren der gemäß dem zweiten Adressteil in ihren Werten variablen Zeichen innerhalb einer vorbestimmten Menge möglicher Werte der Zeichen erfolgt.

13. Vorrichtung nach Anspruch 12,
**gekennzeichnet durch**
eine mit der Adressbestimmungseinrichtung (2) verbundene Adresszusammenfassungseinrichtung (3) mit Mitteln zum Zusammenfassen von mehreren Empfängeradressen zu einer neuen Adresse, die aus einem ersten und einem zweiten jeweils aus einer Kette mit mehreren Zeichen bestehenden Adressteil aufgebaut ist.

14. Vorrichtung nach Anspruch 13,
**gekennzeichnet durch**
Mittel zur Berücksichtigung von Informationen zur Wegelenkung (Routing) (4) beim Zusammenfassen der mehreren Empfängeradressen.

15. Datenpaket mit einem ersten und einem zweiten jeweils aus einer Kette mit mehreren Zeichen bestehenden Adressteil, welche gemeinsam die Empfänger des Datenpaketes festlegen, wobei der zweite Adressteil diejenigen Zeichen einer Adresse kennzeichnet, deren Werte invariabel durch das betreffende Zeichen des ersten Adressteils festgelegt sind, und/oder diejenigen Zeichen der Adresse kennzeichnet, deren Werte variabel sind,
wobei der erste Adressteil lediglich diejenigen Zeichen der Adresse umfasst, deren Werte invariabel sind.

16. Datenpaket nach Anspruch 15,
**dadurch gekennzeichnet, dass**
der Header des Datenpaketes eine Markierung als Kennzeichen für die Verwendung von aus dem ersten und dem zweiten Adressteil bestehenden Adressen aufweist.

17. Datenpaket nach Anspruch 15 oder 16,
**dadurch gekennzeichnet, dass**
das Datenpaket ein IP (Internetprotokoll)-Paket ist.

18. Datenpaket nach Anspruch 17,
**dadurch gekennzeichnet, dass**
- das IP-Paket in einem für die IP-Adresse des Senders vorgesehenen Datenfeld "Source Address" den ersten Adressteil und
- in einem für die IP-Adresse des Empfängers vorgesehenen Datenfeld "Destination Address" den zweiten Adressteil aufweist.

19. Datenpaket nach Anspruch 17,
**dadurch gekennzeichnet, dass**
- das IP-Paket in einem neuen Datenfeld im Header den ersten Adressteil und
- in dem für die IP-Adresse des Empfängers vorgesehenen Datenfeld "Destination Address" den zweiten Adressteil aufweist.

20. Datenpaket nach Anspruch 17,
**dadurch gekennzeichnet, dass**
- das IP-Paket in der ersten Hälfte des für die IP-Adresse des Senders vorgesehenen Datenfeldes "Source Address" die erste Hälfte des ersten Adressteils,
- in der ersten Hälfte des für die IP-Adresse des Empfängers vorgesehenen Datenfeldes "Destination Address" die zweite Hälfte des ersten Adressteils und
- in der zweiten Hälfte des für die IP-Adresse des Empfängers vorgesehenen Datenfeldes "Destination Address" einen auf seine zweite Hälfte reduzierten zweiten Adressteil aufweist.

21. Datenpaket nach einem der Ansprüche 17 bis 20,
**dadurch gekennzeichnet, dass**
die Markierung ein vorbestimmter Wert des "IP Router Alert Option"-Parameters ist.

22. Datenpaket nach einem der Ansprüche 17 bis 21,
**dadurch gekennzeichnet, dass**
das IP-Paket nach IPv4- oder IPv6-Vorgaben aufgebaut ist.

## Claims

1. Method for generating an address field of an electronic message (d) comprising the following steps:
- forming (3) a first and a second address part from in each case a string with several characters, in such a manner that the second address part denotes those characters of an address the values of which are invariably defined by the relevant character of the first address part and/or denotes those characters of the address the values of which are variable, and
- combining (3) the first and the second address part to form the address field, the first address part only comprising those characters of the address the values of which are invariable.

2. Method according to Claim 1, the method being part of a transmission of an electronic message in a communication network from a transmitter to several receivers, comprising the following steps:
- sending (h) the electronic message with the address parts to a network component, and
- transmitting the electronic message to particular receivers allocated to the addresses,
- the determination of the receiver addresses, allocated to the receivers, in the network component by in each case varying the characters which are variable in their values in accordance with the second address part being carried out within a predetermined set of possible values of the characters.

3. Method according to Claim 2, **characterized in that** the first address part comprises those characters of the address the values of which are invariable, and the second address part denotes those characters of the address the values of which are variable.

4. Method according to one of Claims 2 or 3, **characterized in that** a signaling message is used as electronic message.

5. Method according to one of Claims 2 to 4, **characterized in that** network nodes of a communication network (N) and/or different communication networks are used as transmitters and receivers.

6. Method according to one of Claims 2 to 5, **characterized in that** addresses allocated to the network layer are used as addresses of the receivers.

7. Method according to one of Claims 2 to 6, **characterized in that** an IP (Internet Protocol) packet is used as electronic message.

8. Method according to Claim 7,
**characterized in that**
- the IP addresses of the transmitter, contained in the data field "source address" in the header of the IP packet, is used as first address part and
- the second address part is transmitted in a data field "destination address" provided for the IP address of the receiver in the header of the IP packet.

9. Method according to Claim 7, **characterized in that**
- a new data field is set up in the header of the IP packet and
- the first address part is transmitted in the new data field and
- the second address part is transmitted in the data field "destination address" provided for the IP address of the receiver in the header of the IP packet.

10. Method according to Claim 7, **characterized in that**
- the first half of the data field "source address" provided for the IP address of the transmitter in the header of the IP packet is used as first half of the first address part,
- the second half of the first address part is transmitted in the first half of the data field "destination address" provided for the IP address of the receiver in the header of the IP packet and
- a second address part reduced to its second half is transmitted in the second half of the data field "destination address" provided for the IP address of the receiver in the header of the IP packet.

11. Method according to one of Claims 7 to 10, **characterized in that** a predetermined value of the "IP router alert option" parameter of the header of the IP packet is used as identifier for the use of an address consisting of the first and the second address part.

12. Device for transmitting an electronic message from a transmitter to several receivers, comprising
- a message receiving device (1) for receiving the electronic message (a) with at least one address which consists of a first (b) and a second (c) address part in each case consisting of a string having a number of characters, in such a manner that the second address part (c) denotes those characters of the address the values of which are invariably defined by the relevant character of the first address part (b) and/or denotes those characters of the address the values of which are variable, and combining (3) the first and the second address part to form the address, the first address part only comprising those characters of the address the values of which are invariable, and
- a message transmitting device (5) for forwarding the electronic message to particular receivers allocated to the receiver addresses,
- an address determining device (2), connected to the message receiving device (1), the determination of the receiver addresses by in each case varying the characters which are variable in their values, in accordance with the second address part, being carried out within a predetermined set of possible values of the characters.

13. Device according to Claim 12, **characterized by** an address combining device (3) connected to the address determining device (2), with means for combining several receiver addresses to form a new address which is built up of a first and a second address part in each case consisting of a string with several characters.

14. Device according to Claim 13, **characterized by** means for taking into consideration information for routing (4) when combining the several receiver addresses.

15. Data packet with a first and a second address part in each case consisting of a string with several characters which jointly specify the receivers of the data packet, the second address part denoting those characters of an address the values of which are invariably defined by the relevant character of the first address part and/or denotes those characters of the address the values of which are variable,
the first address part only comprising those characters of the address the values of which are invariable.

16. Data packet according to Claim 15, **characterized in that** the header of the data packet has a marking as identifier for the use of addresses consisting of the first and the second address part.

17. Data packet according to Claim 15 or 16, **characterized in that** the data packet is an IP (Internet Protocol) packet.

18. Data packet according to Claim 17, **characterized in that**
- the IP packet has the first address part in a data field "source address" provided for the IP address of the transmitter and
- has the second address part in a data field "destination address" provided for the IP address of the receiver.

19. Data packet according to Claim 17, **characterized in that**
- the IP packet has the first address part in a new data field in the header and
- the second address part in the data field "destination address" provided for the IP address of the receiver.

20. Data packet according to Claim 17, **characterized in that**
- the IP packet has the first half of the first address part in the first half of the data field "source address" provided for the IP address of the transmitter,
- the second half of the first address part in the first half of the data field "destination address" provided for the IP address of the receiver and
- a second address part reduced to its second half in the second half of the data field "destination address" provided for the IP address of the receiver.

21. Data packet according to one of Claims 17 to 20, **characterized in that** the marking is a predetermined value of the "IP router alert option" parameter.

22. Data packet according to one of Claims 17 to 21, **characterized in that** the IP packet is structured in accordance with IPv4 or IPv6 specifications.

## Revendications

1. Procédé pour créer un champ d'adresse d'un message électronique (d), comportant les étapes suivantes :
- formation (3) d'une première partie d'adresse et d'une deuxième partie d'adresse à partir de respectivement une chaîne de plusieurs caractères de manière telle que la deuxième partie d'adresse marque les caractères d'une adresse dont les valeurs sont fixées de manière invariable par le caractère concerné de la première partie d'adresse et/ou marque les caractères de l'adresse dont les valeurs sont variables ; et
- assemblage (3) de la première partie d'adresse et de la deuxième partie d'adresse pour constituer le champ d'adresse,
la première partie d'adresse comprenant uniquement les caractères de l'adresse dont les valeurs sont invariables.

2. Procédé selon la revendication 1, le procédé faisant partie d'une transmission d'un message électronique dans un réseau de communication, d'un émetteur vers plusieurs récepteurs, avec les étapes suivantes :
- envoi (h) du message électronique avec les parties d'adresses à une composante de réseau ; et
- transmission du message électronique à certains récepteurs associés aux adresses ;
la détermination des adresses de récepteurs associées aux récepteurs s'effectuant, dans la composante de réseau, par variation respective des caractères variables en leurs valeurs conformément à la deuxième partie d'adresse dans un ensemble prédéterminé de valeurs possibles des caractères.

3. Procédé selon la revendication 2, **caractérisé en ce que** la première partie d'adresse comprend les caractères de l'adresse dont les valeurs sont invariables et la deuxième partie d'adresse marque les caractères de l'adresse dont les valeurs sont variables.

4. Procédé selon l'une des revendications 2 ou 3, **caractérisé en ce qu'**un message de signalisation est utilisé en tant que message électronique.

5. Procédé selon l'une des revendications 2 à 4, **caractérisé en ce que** sont utilisés, en tant qu'émetteur et récepteur, des noeuds de réseau d'un réseau de communication (N) et/ou de différents réseaux de communication.

6. Procédé selon l'une des revendications 2 à 5, **caractérisé en ce que** des adresses affectées à la couche réseau (Network Layer) sont utilisées en tant qu'adresses des récepteurs.

7. Procédé selon l'une des revendications 2 à 6, **caractérisé en ce que** qu'un paquet IP (protocole internet) est utilisé en tant que message électronique.

8. Procédé selon la revendication 7, **caractérisé en ce que** :
- l'adresse IP de l'émetteur contenue dans l'en-tête du paquet IP dans le champ de données « Source Address » est utilisée en tant que première partie d'adresse ; et
- la deuxième partie d'adresse est transmise dans un champ de données « Destination Address » prévu dans l'en-tête du paquet IP pour l'adresse IP du récepteur.

9. Procédé selon la revendication 7, **caractérisé en ce que**
- un nouveau champ de données est créé dans l'en-tête du paquet IP ; et
- la première partie d'adresse est transmise dans le nouveau champ de données et
- la deuxième partie d'adresse est transmise dans le champ de données « Destination Address » prévu dans l'en-tête du paquet IP pour l'adresse IP du récepteur.

10. Procédé selon la revendication 7, **caractérisé en ce que** :
- est utilisée, en tant que première moitié de la première partie d'adresse, la première moitié du champ de données « Source Address » prévu dans l'en-tête du paquet IP pour l'adresse IP de l'émetteur ;
- la deuxième moitié de la première partie d'adresses est transmise dans la première moitié du champ de données « Destination Address » prévu dans l'en-tête du paquet IP pour l'adresse IP du récepteur ; et
- une deuxième partie d'adresse réduite à sa deuxième moitié est transmise dans la deuxième moitié du champ de données « Destination Address » prévu dans l'en-tête du paquet IP pour l'adresse IP du récepteur.

11. Procédé selon l'une des revendications 7 à 10, **caractérisé en ce qu'**une valeur prédéterminée du paramètre « IP Router Alert Option » de l'en-tête du paquet IP est utilisée en tant que signe distinctif pour l'utilisation d'une adresse constituée de la première partie d'adresse et de la deuxième partie d'adresse.

12. Dispositif de transmission d'un message électronique d'un émetteur vers plusieurs récepteurs, avec :
- un dispositif de réception de messages (1) pour recevoir le message électronique (a) avec au moins une adresse, laquelle est constituée de manière telle à partir d'une première partie d'adresse (b) et d'une deuxième partie d'adresse (c) composées chacune d'une chaîne de plusieurs caractères que la deuxième partie d'adresse (c) marque les caractères de l'adresse dont les valeurs sont fixées de manière invariable par le caractère concerné de la première partie d'adresse (b) et/ou marque les caractères de l'adresse dont les valeurs sont variables, et assemblage (3) de la première partie d'adresse et de la deuxième partie d'adresse pour constituer l'adresse, la première partie d'adresse comprenant uniquement les caractères de l'adresse dont les valeurs sont invariables ; et
- un dispositif de transmission de messages (5) pour retransmettre le message électronique à certains récepteurs associés aux adresses de récepteurs ;
la détermination d'adresses de récepteurs s'effectuant, dans un dispositif de détermination d'adresses (2) relié au dispositif de réception de messages (1), par variation respective des caractères variables en leurs valeurs conformément à la deuxième partie d'adresse dans un ensemble prédéterminé de valeurs possibles des caractères.

13. Dispositif selon la revendication 12, **caractérisé par** un dispositif de regroupement d'adresses (3), relié au dispositif de détermination d'adresses (2), avec des moyens pour regrouper plusieurs adresses de récepteurs en une nouvelle adresse qui est constituée à partir d'une première partie d'adresse et d'une deuxième partie d'adresse, respectivement constituées d'une chaîne de plusieurs caractères.

14. Dispositif selon la revendication 13, **caractérisé par** des moyens pour prendre en compte des informations de routage (4) lors du regroupement des plusieurs adresses de récepteurs.

15. Paquet de données avec une première partie d'adresse et une deuxième partie d'adresse, respectivement constituées d'une chaîne de plusieurs caractères, lesquelles déterminent conjointement les récepteurs du paquet de données, la deuxième partie d'adresse marquant les caractères d'une adresse dont les valeurs sont fixées de manière invariable par le caractère concerné de la première partie d'adresse et/ou marquant les caractères de l'adresse dont les valeurs sont variables, la première partie d'adresse comprenant uniquement les caractères de l'adresse dont les valeurs sont invariables.

16. Paquet de données selon la revendication 15, **caractérisé en ce que** l'en-tête du paquet de données présente un marquage en tant que signe distinctif pour l'utilisation d'adresses constituées de la première partie d'adresse et de la deuxième partie d'adresse.

17. Paquet de données selon la revendication 15 ou 16, **caractérisé en ce que** le paquet de données est un paquet IP (protocole internet).

18. Paquet de données selon la revendication 17, **caractérisé en ce que** :
- le paquet IP comporte la première partie d'adresse dans un champ de données « Source Address » prévu pour l'adresse IP de l'émetteur et
- la deuxième partie d'adresse dans un champ de données « Destination Address » prévu pour l'adresse IP du récepteur.

19. Paquet de données selon la revendication 17, **caractérisé en ce que** :
- le paquet IP comporte la première partie d'adresse dans un nouveau champ de données dans l'en-tête et
- la deuxième partie d'adresse dans le champ de données « Destination Address » prévu pour l'adresse IP du récepteur.

20. Paquet de données selon la revendication 17, **caractérisé en ce que** :
- le paquet IP comporte la première moitié de la première partie d'adresse dans la première moitié du champ de données « Source Address » prévu pour l'adresse IP de l'émetteur,
- la deuxième moitié de la première partie d'adresse dans la première moitié du champ de données « Destination Address » prévu pour l'adresse IP du récepteur et
- une deuxième partie d'adresse réduite à sa deuxième moitié dans la deuxième moitié du champ de données « Destination Address » prévu pour l'adresse IP du récepteur.

21. Paquet de données selon l'une des revendications 17 à 20, **caractérisé en ce que** le marquage est une valeur prédéterminée du paramètre « IP Router Alert Option ».

22. Paquet de données selon l'une des revendications 17 à 21, **caractérisé en ce que** le paquet IP est constitué conformément aux spécifications IPv4 ou IPv6.
